# EUROPEAN PATENT SPECIFICATION

(11) **EP 1 356 697 B1**
(45) Date of publication and mention of the grant of the patent: **14.02.2007**
(21) Application number: 01960456.0
(22) Date of filing: 03.07.2001
(51) Int. Cl.: H04Q 7/28, H04Q 7/30

(54) **METHOD FOR SUPPORTING HALF DUPLEX CALLS IN A RADIO COMMUNICATIONS SYSTEM**
VERFAHREN ZUR UNTERSTÜTZUNG VON HALBDUPLEX-ANRUFEN IN EINEM FUNK-KOMMUNIKATIONSSYSTEM
SYSTEME DE COMMUNICATIONS RADIO, STATION D'EMETTEUR DE BASE ET PROCEDE DE SUPPORT D'APPELS SEMI-DUPLEX

(30) Priority: 24.08.2000 GB 0016420
(43) Date of publication of application: 29.10.2003
(73) Proprietor: MOTOROLA, INC., Schaumburg, IL 60196 (US)
(72) Inventor: AITKENHEAD, Gary, Bramley, Hampshire RG26 25QF (GB); URS, Kamala, Diane, Bartlett, IL 60103 (US)
(74) Representative: McCormack, Derek James
(86) International application number: PCT/EP2001/007624
(87) International publication number: WO 2002/003581

(56) References cited:
- WO-A-94/28687
- WO-A-99/12342
- GB-A- 2 330 484
- US-A- 5 497 396
- US-A- 5 506 837
- US-A- 6 021 326

## Description

### Field Of The Invention

The present invention relates to a radio communications system, base transmitter and method for supporting half duplex calls.

### Background Of The Invention

In a half duplex communications system between two portable or mobile radio communications units or the like, herein referred to collectively as mobile stations, MSs, a message is allowed to be sent by only one MS at a time. Thus, such systems need to include a signalling procedure or protocol to establish which MS is to be allowed to transmit. After a connection has been established by such a procedure a communication message, e.g. representing speech of a user, is sent by the MS which has been authorised to transmit. There is also a signalling procedure to indicate that a transmitted message has come to an end. Permission to transmit is commonly requested by a 'push to talk' mechanism. Permission to transmit is flipped back and forth as necessary between the two MSs to enable a two way conversation to take place. This form of communication is also referred to in the art as 'dispatch calling'. MSs including those which operate according to a half duplex procedure may operate according to the Terrestrial Trunked Radio (TETRA) system which is a modem digital sytem using standard industry procedures. The signals representing speech in such a system are in a digital ACELP (algebraic code excited linear prediction) format.

In contrast, a full duplex system is one in which when a connection has been established between two transceivers either transceiver may transmit at any time. Public Switched Telephone Networks (PSTNs) generally provide full duplex communications. The signals representing speech in these systems is generally in a different format from that of half duplex systems, e.g. it is in a PCM (pulse code modulation) format.

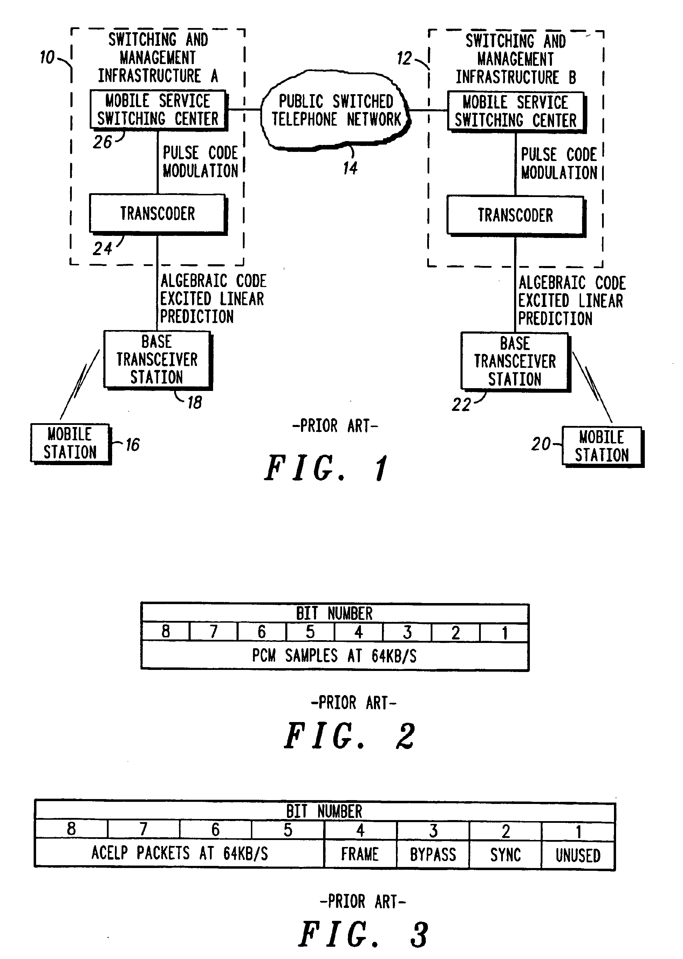

Many cellular telephone systems provide national or international roaming to their subscribers via inter-system connections to similar systems in other regions or countries, typically via full duplex PSTNs. An example of such an arrangement is shown in Figure 1 of the accompanying drawings. In the arrangement of Figure 1, two network switching controllers known as Switching and Management Infrastructures (SwMIs) 10 and 12 each have a transcoder (XCDR) 24 and a mobile service switching centre (MSC) 26. The two SWMIs are interconnected via a PSTN 14, with a Mobile Station (MS) 16 in communication with a Base Transmission Station (BTS) 18 that is under the control of SwMI 10, and a MS 20 in communication with a BTS 22 that is under the control of SwMI 12. Unfortunately, such arrangements typically support only a subset of services for inter-system communications. For example, inter-system duplex telephone calling is supported, while half-duplex calling is not. This is because PSTNs do not currently provide control signalling necessary to support half-duplex calling. This could prove to be a serious limitation where an important call is initiated in a half duplex format and the call fails because it cannot reach its destination in that format.

### Summary Of The Invention

The present invention provides a novel system, method and apparatus for use therein for enabling half duplex, e.g. Push-To-Talk (PTT), messages to be sent via a full duplex link such as a Public Switched Telephone Network (PSTN). Such a system, method and apparatus is not available in the prior art.

In accordance with the present invention in a first aspect there is provided a method of communication for supporting half-duplex communications via a full-duplex link, the method comprising the steps of:
sending a communication in half duplex format from a first mobile radio communications station MS to a first base transceiver station BTS;
converting the format of the communication in half duplex format received at the first BTS into a full duplex format and sending the communication converted into the full duplex format from said first BTS to a second BTS;
converting the format of the communication received at the second BTS back into a half duplex format at the second BTS and sending the communication in the half duplex format to a second MS;
thereby delivering the communication from said first MS to said second MS.

In the method according to the first aspect of the invention, the full duplex communication may be sent via a communication link comprising a public switched telephone network, PSTN . The full duplex link may itself comprise a plurality of links of different types, e.g. landline, radio and optionally other links. The communication sent by the first BTS may be introduced into the PSTN and extracted from the PSTN by the second BTS via network switching controllers which conventionally are used to provide introduction and extraction of communications by MSs into and out of such a network.

'Mobile station (MS)' as used herein is intended to include portable and mobile radio telephones and radio transceivers. 'Base transceiver station (BTS)' as used herein is intended to refer to a fixed transceiver which is operable to send radio communications to and receive radio communications from a mobile station (MS).

In the method according to the first aspect of the invention, the conversion of communication formats of signals representing speech carried out by the BTSs may be between a half duplex format which comprises a non-PCM format, such as a coded speech digital signal format, and a full duplex format which comprises a pulse code modulation (PCM) signal format. The non-PCM signal format may comprise a Terrestrial Trunked Radio (TETRA) digital signal format.

The method according to the invention may further comprise the step of establishing connection along the full duplex link enabling the communication to take place by a procedure wherein the first BTS produces a call set up signal identifying the second MS, the call set up signal being in a format which is recognised by the full duplex system, e.g. especially a DTMF (dual tone multi-frequency) format which is recognised by many PSTNs. Such a call set up signal may be sent via a speech channel of the full duplex link. In such a procedure, the second BTS may be operable to convert such a set up signal back into an identity signal recognised by the second MS as a half duplex call set up signal.

The present invention beneficially provides a signalling and communications method that can be deployed to include a transcoder bypass operation. A transcoder is a known device needed for example to convert between the format, e.g. PCM, required for transmission via a full duplex link such as a PSTN and another format, such as a non-PCM format, used outside such a link. However, use of a such a transcoder adds to the cost and complexity of a communications system. For transmissions that originate from a MS that uses a non-PCM coded format which are destined for a MS that uses the same non-PCM coded format, it is clearly beneficial to avoid transcoding. The method, system and apparatus according to the invention may be operated in a manner such that if a transcoder is included to provide communication in the full duplex link, the transcoder may be bypassed by the provision by the first BTS of a transcoder by-pass signal when a half duplex signal is detected by the first BTS as described herein.

In the method according to the first aspect of the invention, there may be included the step of establishing transmit permission at a maximum of one of said MSs at any given time. One of said MSs may thus be a calling MS and the other of said MSs a called MS, the method further comprising the step of establishing, prior to sending said communication, a default transmit permission condition wherein one of said MSs has transmit permission. The step of maintaining the half duplex transmit permission of either of said MSs may be made at either of said BTSs.

The method according to the first aspect of the invention may further include the steps of:
handing off one of said MSs to a third BTS; and
transmitting, from the BTS from which said MS is being handed to said third BTS, the half duplex transmit status of said MS being handed off. Alternatively, the method may include the steps of:
   handing off one of said MSs to a third BTS; and
   transmitting, from the BTS from which said MS is not being handed off to said third BTS, the half duplex transmission status of said MS being handed off.

The method according to the first aspect of the invention may further include the step of transmitting a half duplex transmission control signalling message from a sending one of said BTSs to a receiving one of said BTSs using in-band signalling via the full duplex connection between the two BTSs. The transmitting step may be made via a transcoder bypass. The transmitting step may be made by transmitting said half duplex transmission control signalling message via an unused bit of at least one octet of a transcoder bypass transmission. The transmitting step may comprise:
defining a message header in bits 5-8 allocated to an ACELP packet, wherein said message header denotes that subsequent bits include an in-band signalling message; and
transmitting said half duplex transmission control signalling message via any of said subsequent bits.

In the method according to the first aspect of the invention, the sending of the communication in half duplex format between the second BTS and the second MS may comprise said first BTS inserting an end-to-end signalling message into a setup message indicating a half-duplex call request. Iinitiating the half-duplex communication between the second BTS and the second MS may be brought about by a network switch controller associated with said second BTS identifying a half duplex call request from a telephone number associated with either of said MS.

The method according to the first aspect of the invention may further comprise the step of transmitting a "half duplex reject" message from one of said BTSs to the other of said BTSs. The BTS receiving such a message may request half duplex transmission permission if the other rejecting BTS currently maintains the permission to transmit for an MS currently connected to said rejecting BTS. Alternatively, a "half duplex on acknowledgement" message may be sent from one of said BTSs to the other one of said BTSs where neither of said MSs currently has permission to transmit and both of said BTSs simultaneously send a "half duplex on" request to each other.

According to the present invention in a second aspect, there is provided a communications system comprising:
a first MS adapted to communicate with a first BTS in a half duplex format;
a first BTS adapted to convert the format of a half duplex format communication from the first MS into a full duplex format and to send the communication in full duplex frmat to a second BTS;
a second BTS adapted to convert the format of the communication received in full duplex format from the first BTS into half duplex format and to send the communication in half duplex format to a second MS via a full-duplex connection and via a full-duplex transmission medium; and
a second MS adapted to receive the communication in half duplex format from the second BTS;
wherein said first MS is allowed to transmit a communication in half duplex format to be received in half duplex format by said second MS. The system may be operable to carry out the method according to the first aspect.

According to the present invention in a third aspect there is provided a base transmitter station operable to perform the conversion of communications between half duplex and full duplex format for use in the method according to the first aspect. The base trasmitter station may be operable to serve as either the first BTS or the second BTS as defined herein, or both.

Therefore, transmission of half duplex messages and control signalling for such transmissions is beneficially enabled via a full duplex link such as a PSTN by the present invention. This is achieved by suitable conversion at the first BTS of the format of such a call made by the first MS to enable transmission along the full duplex link to take place and re-conversion at the second BTS of the call into a format recognised by the second MS.

In particular, the present invention beneficially provides a signalling and communications method, system and apparatus that can beneficially include a transcoder bypass operation.

The present invention may be applied to inter-system connections and migration to foreign systems, and, indeed, to any situation where full-duplex links are to be used as the bearer of calls made in a half-duplex format where no signalling mechanism for half-duplex transmission is provided by the full duplex link or network.

Thus the present invention provides a method and system of communication between two remote MSs via a link which has not previously been available. This unexpectedly and beneficially provides a solution to the problem of prior art systems described earlier in which calls initiated in half duplex format are unable to reach their destination if this has to be reached via a full duplex link.

Another method is described in document US 5 506 837.

US 5,297,147 describes an in-band signalling technique that allows transcoding to be bypassed. However, it is not contemplated in this reference to send half duplex communications via a full duplex network as described herein.

GB 2,321,160A describes a system wherein a MS can provide single slot or multi-slot data transmissions over an air interface. Again, it is not contemplated in this reference to send half duplex communications via a full duplex network as described herein.

Embodiments of the present invention will now be described by way of example with reference to the accompanying drawings, in which:

### Brief Description Of The Drawings

Figure 1 is a simplified illustration of a prior art radio communications inter-system arrangement;
Figure 2 is a simplified tabular illustration of a prior art PSTN audio information coding scheme;
Figure 3 is a simplified tabular illustration of a prior art traffic format for indicating that transcoder bypass should occur;
Figure 4 is a simplified illustration of a system for PTT transmission control via a PSTN, constructed and operable in accordance with a preferred embodiment of the present invention;
Figure 5 is preferred method for converting a half-duplex call into a full-duplex call, operable in accordance with a preferred embodiment of the present invention;
Figure 6 is a simplified control flow illustration of PTT signalling operative in accordance with a preferred embodiment of the present invention;
Figures 7 and 8, taken together, are simplified illustrations of messaging structures for transcoder bypass in-band PTT signalling, operative in accordance with a preferred embodiment of the present invention;
Figure 9 is a simplified control flow illustration of BTS handoff with PTT signalling, operative in accordance with a preferred embodiment of the present invention; and
Figure 10 is a simplified control flow illustration of BTS handoff with PTT signalling, operative in accordance with another preferred embodiment of the present invention.

### Detailed Description Of Embodiments of the Invention

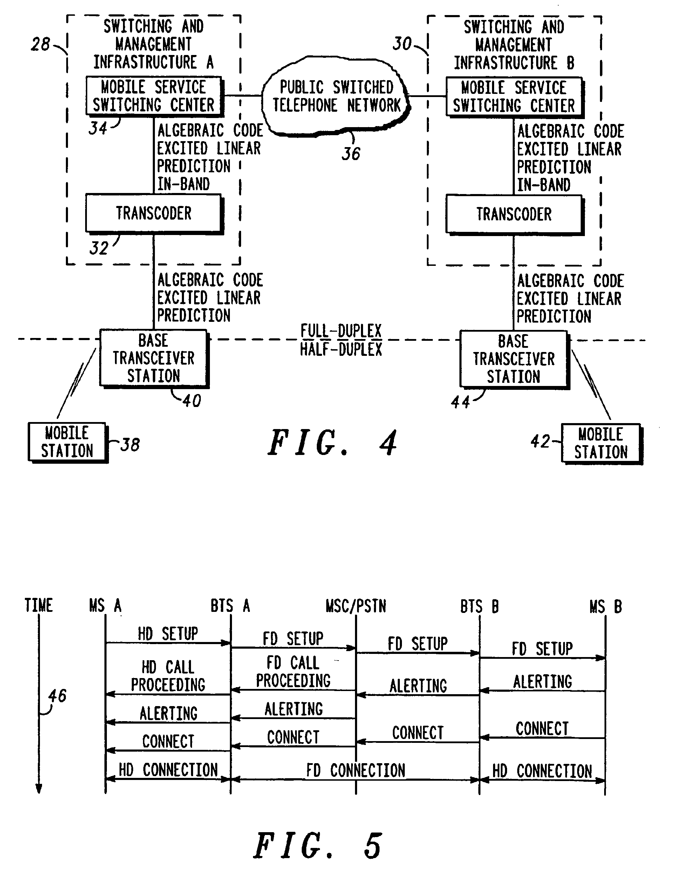

Reference is now made to Figure 4 which is a simplified illustration of a system for PTT transmission control via a PSTN, constructed and operable in accordance with a preferred embodiment of the present invention. As in the system of Fig. 1, the system of Fig. 4 shows two Switching and Management Infrastructures (SwMIs) 28 and 30, each having a transcoder (XCDR) 32 and a mobile service switching centre (MSC) 34, interconnected via a full-duplex transmission link,such as a PSTN 36. A PTT-capable Mobile Station (MS) 38 is in communication with a Base Transmission Station (BTS) 40 that is under the control of the SwMI 28, and a PTT-capable MS 42 is in communication with a BTS 44 that is under the control of the SwMI 30. A suitable platform for the BTSs 40 and 44 is an Enhanced Base Transceiver System (EBTS), manufactured by Motorola Inc., and described in Motorola Equipment Manual 68P81091E20, suitably modified as needed to implement methods described hereinbelow with reference to Figs. 4 to 10. Such modification is well within the ordinary capability of persons familiar with the construction and operation of BTSs.

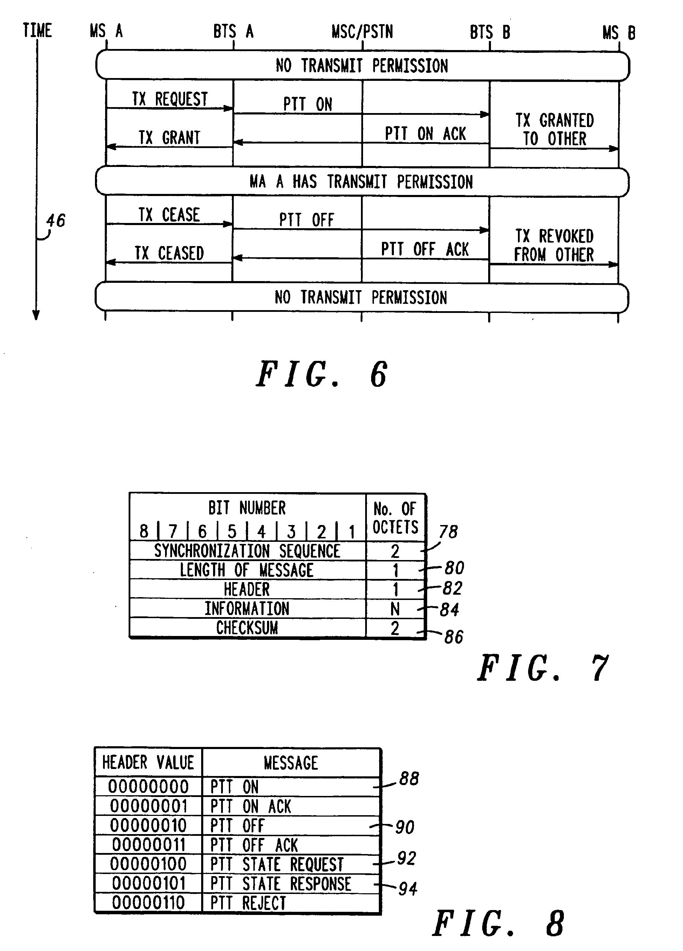

An exemplary operational scenario of the system of Fig. 4 is now described with additional reference to Fig. 5, which is a preferred method for converting a half-duplex call into a full-duplex call, operable in accordance with a preferred embodiment of the present invention, and Fig. 6, which is a simplified control flow illustration of PTT signalling operable in accordance with a preferred embodiment of the present invention. In Figs. 5 and 6, MS 38 and BTS 40 are referred to as "MS A" and "BTS A" respectively, and MS 42 and BTS 44 are referred to as "MS B" and "BTS B" respectively. A control time line is represented in Fig. 5 by an arrow 46.

Fig. 5 shows a simplified signalling sequence used by a BTS to set up a full-duplex call on behalf of MS A making a half-duplex call to MS B in another system. BTS A handles the call as half-duplex via a half-duplex connection between MS A and BTS A, while it uses full-duplex call set-up signalling via the MSC to establish a full-duplex connection via the PSTN. On the receiving side BTS B handles the call as half-duplex via a half-duplex connection between MS B and BTS B. Once the full-duplex connection is in place, BTS A and BTS B can use a PTT transcoder bypass in-band signalling mechanism described herein to handle PTT transmission control.

The sequence of steps shown in Fig. 5 is as follows. MS A requests that a half-duplex call to MS B in another system be set up, and sets up a half-duplex connection to BTS A. BTS A recognises that the half-duplex call type cannot be carried via the PSTN via SwMI A to SwMI B. Therefore, BTS A converts this call into a full-duplex call 52 using as full-duplex connection the link via the MSC of SwMIA and the PSTN 36 to the MSC of SwMI B 30 associated with BTS B. A signal representing the identity of MS B may be transmitted by BTS A to reach BTS B. The signal may be in DTMF format. BTS B detects that the call it receives is a half duplex call, such as through end-to-end signalling inserted by BTS A into a set up message to SwMI B or by the type of number used for the calling or called party, as the numbering scheme used for full duplex telephone calls is normally different from that used for half duplex private calls. In any event, a signal representing the identity of MS B may be transmitted by BTS A to reach BTS B. The signal may be in DTMF format. BTS B, on detecting that the incoming call request is for a half-duplex call, sets up a half-duplex connection to MS B. The call set-up proceeds with an alerting phase followed by a connect message when MS B answers the call, which results in BTS A being through-connected to BTS B with a full-duplex path. However, BTS A and BTS B continue to signal the call as a half-duplex call to MS A and MS B respectively.

Once the call is through-connected, in-band signalling may be used to control the transmission permission, as now seen more particularly in Figure 6. The control flow illustration of Figure 6 begins with neither MS A nor MS B currently having permission to effect a PTT transmission. MS A then sends a request to initiate a half duplex PTT transmission to BTS A. BTS A is preferably aware of the current PTT transmission status. By knowing the current PTT transmission status, the BTS at which the call originates ensures that only one MS at a time has permission to transmit. BTS A then sends a "PTT on" request to BTS B via PSTN 36 and SwMI 30. In response, BTS B sends a "PTT on" acknowledgement to BTS A. BTS A then notifies MS A that it has permission to transmit. BTS B also preferably notifies MS B that PTT transmit permission has been granted to MS A. When MS A ceases transmission, MS A indicates this state to BTS A which, knowing that MS A currently has PTT transmit permission, sends a "PTT off" request to BTS B via PSTN 36 and SwMI 30. In response, BTS B sends a "PTT off" acknowledgement to BTS A. BTS A then notifies MS A that it no longer has permission to transmit. BTS B also preferably notifies MS B that MS A's PTT transmit permission has been revoked.

There are at least two situations where collision control may be required to ensure that only one MS at any particular time has permission to transmit. Firstly, where BTS A makes a transmission request on behalf of MS A, yet MS B currently has permission to transmit, and such permission status is maintained at BTS B, BTS B may respond with a "PTT reject" message instead of a "PTT on" acknowledgement, thereby rejecting the transmission request. Secondly, there is a risk in the case where neither MS has permission to transmit and both BTSs simultaneously send a "PTT On" request to each other. In this case the collision may be resolved in several ways. For example, the call originator could be deemed to have the highest priority so that the BTS associated with the call originator responds to the "PTT On" request with "PTT reject," while the other BTS responds with a "PTT On Acknowledgement". In this way, only one BTS holds the transmit permission. Alternatively, the BTS that last held the transmit permission could be deemed to be lower in priority so that the transmit permission priority is alternated between the BTSs in the call.

All PTT transmission control signalling between BTS A and BTS B is preferably performed using transcoder bypass in-band signalling whereby PTT signalling is included in the in-band signalling when transcoder bypass is enabled. To effect this, the existing transcoder bypass mechanism is preferably enhanced to allow unused bit slots to contain PTT messages in the same manner as the synchronization sequence, described earlier with reference to Figure 3.

Reference is now made to Figures 7 and 8 which, taken together, are simplified illustrations of messaging structures for transcoder bypass in-band PTT signalling, operable in accordance with a preferred embodiment of the present invention. Reference to octets in Figure 7 is hereinafter used to denote "logical" octets constructed from the concatenation of bit streams carried by the unused bit number 1 of multiples of the "physical" octet shown in Figure 3. Using this bit stream, various PTT signalling messages, such as are defined in Figure 8, may be sent. Normally, bit number 1 is set to zero when no PTT signalling information is being transmitted. Therefore, a signalling message is preferably preceded with a two-octet synchronisation sequence 78 to allow the receiving end to detect that a signalling message is to follow. As an alternative to using bit '1' for the signalling stream, bits 5-8 allocated to ACELP packets could be used to define a message header that could be used to denote that the following information is either an ACELP formatted packet or an in-band signalling message. The signalling message itself preferably contains:
- a length indicator 80 which specifies how many octets there are in the PTT message;
- a header 82 which indicates the PTT message type;
- an optional information field 84 which may be present according to the message type and contain parameters relevant to that message; and
- a checksum 86 which is used to ensure that no errors occurred in the message during transmission.

Typically, the "PTT On 88," "PTT Off 90," and "PTT State Request 92" messages shown in Fig. 8, do not have any information field. The "PTT State Response 94" message preferably has a one-octet information field indicating one of three values:
- PTT On;
- PTT Off; and
- No PTT.
This information field indicates whether MS A currently has PTT transmit permission, whether MS B currently has PTT permission, or whether neither MS A nor MS B has permission.

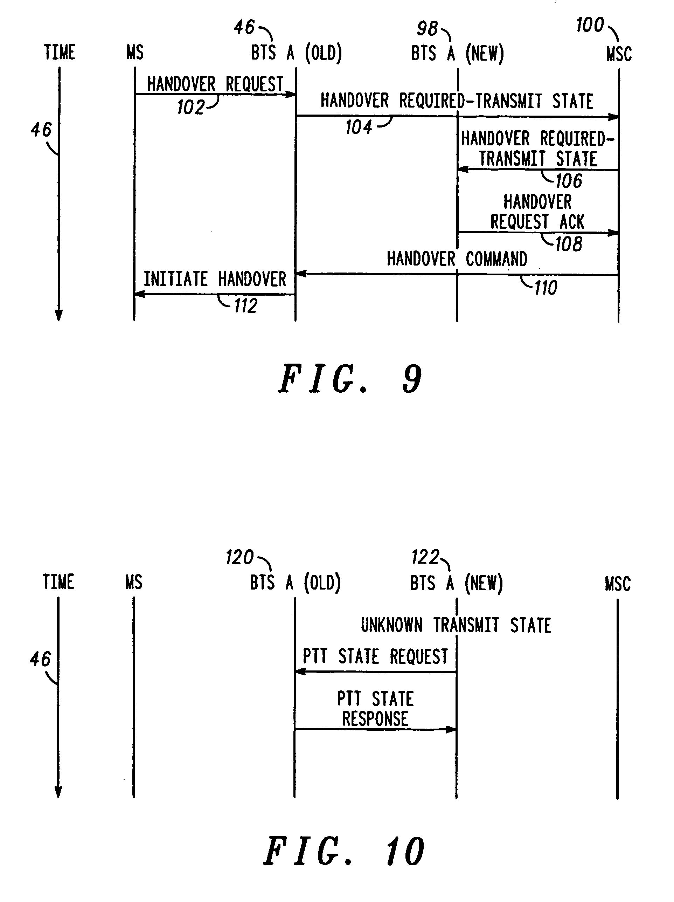

Reference is now made to Figure 9, which is a simplified control flow illustration of BTS handoff with PTT signalling, operable in accordance with a preferred embodiment of the present invention. If either MS A or MS B requires a handoff from one BTS to another, a new serving BTS, to which the MS's current PTT permission status is unknown, must be informed of the MS's current PTT permission status so that the PTT transmission control mechanism can be preserved. This may be achieved as part of the normal handover signalling using conventional techniques as shown in Figure 9. MS A issues a handover request 102 to the current serving BTS, labelled "BTS A (old) 96," which forwards the request 104 to its MSC 100 along with the current PTT transmit status of MS A. The MSC 100 then transmits the handover request and PTT status 106 to the new serving BTS, labelled "BTS A (new) 98" which acknowledges the request 108 and receives the current PTT transmit status. The MSC 100 then issues the handover command to BTS A (old) 110 which notifies MS A of the handover 112. Such handover signalling is a typical known procedure used for example in iDEN systems where GSM-type cellular signalling is extended such that some information is passed transparently via the MSC from the old BTS to the new BTS. This end-to-end user information field may therefore be used to carry the PTT transmit state between the old and new BTS in accordance with this embodiment of the present invention.

Reference is now made to Figure 10, which is a simplified control flow illustration of BTS handoff with PTT signalling, operable in accordance with a preferred embodiment of the present invention. The method illustrated in Figure 10 is an alternative to the method shown in Figure 9. In Figure 10 BTS A (new) 122 uses in-band signalling, such as the XCDR-bypass PTT control mechanism described earlier, via a wired or wireless connection to BTS B 120 after handover has been completed to retrieve the transmit state from BTS B.

## Claims

1. A method of communication for supporting half-duplex communications via a full-duplex link, the method comprising the steps of :
sending a communication in half duplex format from a first mobile radio communications station MS (38) to a first base transceiver station BTS (40);
converting the format of the communication in half duplex format received at the first BTS into a full duplex format and sending the communication converted into the full duplex format from said first BTS (40) to a second BTS (44);
converting the format of the communication received at the second BTS back into a half duplex format at the second BTS and sending the communication in the half duplex format to a second MS (42);
thereby delivering the communication from said first MS (38) to said second MS (42).

2. A method according to claim 1 wherein said full duplex communication is sent via a communication link comprising a public switched telephone network, PSTN .

3. A method according to claim 2 and wherein the communication sent by the first BTS is introduced into and extracted from the PSTN via network switching controllers.

4. A method according to any one of the preceding claims and wherein the format of communications is converted by the BTSs between a half duplex format which comprises a non-pulse code modulated format and a full duplex format which comprises a pulse code modulated signal format.

5. A method according to claim 4 and wherein the non-pulse code modulated format comprises a Terrestrial Trunked Radio (TETRA) digital signal format.

6. A method according to any one of the preceding claims and which further comprises the step of establishing connection along the full duplex link enabling the communication to take place by a procedure wherein the first BTS produces a call set up signal identifying the second MS, the call set up signal being in a format which is recognised by the full duplex system.

7. A method according to claim 6 and wherein the format of the call set up signal produced by the first BTS is dual tone multi-frequency format.

8. A method according to claim 7 and wherein the call set up signal is sent via a speech channel of the full duplex link.

9. A method according to claim 6, claim 7 or claim 8 and wherein the second BTS is operable to convert the call set up signal back into an identity signal recognised by the second MS as a half duplex call set up signal.

10. A method according to any one of the preceding claims and further comprising the step of establishing transmit permission at a maximum of one of said MSs (38,42) at any given time.

11. A method according to any one of the preceding claims wherein one of said MSs (38,42) is a calling MS, wherein the other of said MSs (38,42) is a called MS, the method further comprising the step of establishing, prior to sending said communication, a default push to talk, PTT, transmit permission condition wherein either of said calling MS and said called MS has PTT transmit permission.

12. A method according to claim 11 and further comprising the step of maintaining the PTT transmit status of either of said MSs (38,42) at either of said BTSs (40,44).

13. A method according to claim 12 and further comprising the steps of:
handing off one of said MSs (38,42) to a third BTS; and
transmitting, from the BTS (40,44) from which said MS is being handed to said third BTS, the PTT transmission status of said MS (38,42) being handed off.

14. A method according to claim 12 and further comprising the steps of:
handing off one of said MSs (38,42) to a third BTS; and
transmitting, from the BTS (40,44) from which said MS is not being handed off to said third BTS, the PTT transmission status of said MS (38,42) being handed off.

15. A method according to any of the preceding claims the method further comprising the step of:
transmitting a half duplex transmission control signalling message from a sending one of said BTSs (40,44) to a receiving one of said BTSs (40,44) using in-band signalling via the full-duplex connection between the two BTSs.

16. A method according to claim 15 and wherein said transmitting step comprises transmitting said half duplex transmission control signalling message via an in-band transcoder bypass transmission.

17. A method according to claim 16 and wherein said transmitting step comprises transmitting said half duplex transmission control signalling message via an unused bit of at least one octet of said transcoder bypass transmission.

18. A method according to claim 16 or 17 and wherein the transmitting step comprises:
defining a message header in bits 5-8 allocated to an ACELP packet, wherein said message header denotes that subsequent bits include an in-band signalling message; and
transmitting said half duplex transmission control signalling message via any of said subsequent bits.

19. A method according to any one of the preceding claims and wherein sending the communication in half duplex format between the second BTS and the second MS comprises said first BTS (40) inserting an end-to-end signalling message into a setup message indicating a half-duplex call request.

20. A method according to any one of the preceding claims wherein said initiating said second half-duplex connection step comprises a network switch controller (30) associated with said second BTS (44) identifying a half-duplex call request from a telephone number associated with either of said MSs (38,42).

21. A method according to any of the preceding claims the method further comprising the step of transmitting a "half duplex reject" message from one of said BTSs (40,44) to the other of said BTSs (40,44) requesting half duplex transmission permission if said rejecting BTS (40,44) currently maintains the permission to transmit for one of said MSs (38,42) currently connected to said rejecting BTS (40,44).

22. A method according to any one of the preceding claims the method further comprising the step of transmitting a "half duplex reject" message from a call originating one of said BTSs (40,44) to a call receiving one of said BTSs (40,44) and transmitting a "half duplex on acknowledgement" message from said call receiving one of said BTSs (40,44) to said call originating one of said BTSs (40,44) where neither of said MSs (38,42) currently has permission to transmit and both of said BTSs (40,44) simultaneously send a "half duplex on" request to each other.

23. A communication system comprising:
a first MS (38) adapted to communicate with a first BTS (40) in a half duplex format;
a first BTS adapted to convert the format of a half duplex format communication from the first MS into a full duplex format and to send the communication in full duplex frmat to a second BTS (44):
a second BTS (44) adapted to convert the format of the communication received in full duplex format from the first BTS (40) into half duplex format and to send the communication in half duplex format to a second MS via a full-duplex connection and via a full-duplex transmission medium (36); and
a second MS (42) adapted to receive the communication in half duplex format from the second BTS.
wherein said first MS (38) is allowed to transmit a communication in half duplex format to be received in half duplex format by said second MS.

24. A communications system according to claim 23 further comprising means for carrying out the steps of according to a method claimed in any one of claims 2 to 22.

25. A base transmitter station comprising means to perform the conversion of communications between half duplex and full duplex format according to the method claimed in any one of claims 1 to 22.

## Patentansprüche

1. Verfahren einer Kommunikation zur Unterstützung von Halbduplex-Kommunikationen über eine Vollduplex-Verbindung, wobei das Verfahren die folgenden Schritte umfasst:
Senden einer Kommunikation in einem Halbduplex-Format von einer ersten mobilen Funkkommunikationsstation MS (38) an eine erste Basistransceiverstation BTS (40);
Wandeln des Formates der bei der ersten BTS in einem Halbduplex-Format empfangenen Kommunikation in ein Vollduplex-Format und Senden der in das Vollduplex-Format gewandelten Kommunikation von der ersten BTS (40) an eine zweite BTS (44);
Wandeln, bei der zweiten BTS, des Formates der bei der zweiten BTS empfangenen Kommunikation zurück in ein Halbduplex-Format und Senden der Kommunikation in dem Halbduplex-Format an eine zweite MS (42);
wodurch die Kommunikation von der ersten MS (38) an die zweite MS (42) geliefert wird.

2. Verfahren gemäß Anspruch 1, wobei die Vollduplex-Kommunikation über eine Kommunikationsverbindung gesendet wird, die ein öffentliches Telefonnetz, PSTN, umfasst.

3. Verfahren gemäß Anspruch 2, wobei die durch die erste BTS gesendete Kommunikation über Netzwerkvermittlungssteuerungen in das PSTN eingeführt und aus dem PSTN extrahiert wird.

4. Verfahren gemäß einem der vorangehenden Ansprüche, wobei das Format der Kommunikationen durch die BTSs zwischen einem Halbduplex-Format, das ein nichtpulscodemoduliertes Format umfasst, und ein Vollduplex-Format, das ein pulscodemoduliertes Signalformat umfasst, gewandelt wird.

5. Verfahren gemäß Anspruch 4, wobei das nicht-pulscodemodulierte Format ein digitales TETRA-Signalformat umfasst (TETRA = Bündelfunk).

6. Verfahren gemäß einem der vorangehenden Ansprüche, das weiterhin den folgenden Schritt umfasst: Einrichten einer Verbindung entlang der Vollduplex-Verbindung, wodurch gewährleistet wird, dass die Kommunikation durch ein Verfahren stattfindet, in dem die erste BTS ein Verbindungsaufbausignal erzeugt, das die zweite MS identifiziert, wobei das Verbindungsaufbausignal über ein Format verfügt, das von dem Vollduplex-System erkannt wird.

7. Verfahren gemäß Anspruch 6, wobei das durch die erste BTS erzeugte Format des Verbindungsaufbausignals ein Dualtonmehrfrequenzformat ist.

8. Verfahren gemäß Anspruch 7, wobei das Verbindungsaufbausignal über einen Sprachkanal der Vollduplex-Verbindung gesendet wird.

9. Verfahren gemäß Anspruch 6, Anspruch 7, oder Anspruch 8, wobei die zweite BTS betreibbar ist, um das Verbindungsaufbausignal in ein Identitätssignal zurück zu wandeln, das durch die zweite MS als ein Halbduplex-Verbindungsaufbausignal erkannt wird.

10. Verfahren gemäß einem der vorangehenden Ansprüche, das weiterhin den folgenden Schritt umfasst: Einrichten einer Übertragungserlaubnis bei einem Maximum von einer der MSs (38,42) zu irgendeiner gegebenen Zeit.

11. Verfahren gemäß einem der vorangehenden Ansprüche, wobei eine der MSs (38,42) eine anrufende MS ist, wobei die andere von den MSs (38,42) eine angerufene MS ist, wobei das Verfahren weiterhin den folgenden Schritt umfasst: vor einem Senden der Kommunikation, Einrichten einer vorgegebenen PTT-Übertragungserlaubnisbedingung (PTT = Push To Talk = Drücken um zu sprechen), wobei eine der anrufenden MS und der angerufenen MS, über eine PTT-Übertragungserlaubnis verfügt.

12. Verfahren gemäß Anspruch 11, das weiterhin den folgenden Schritt umfasst: Aufrechterhalten des PTT-Übertragungszustandes einer der beiden MSs (38,42) bei einer der beiden BTSs (40,44).

13. Verfahren gemäß Anspruch 12, das weiterhin die folgenden Schritte umfasst:
Weiterreichen einer der MSs (38,42) an eine dritte BTS; und
Übertragen von der BTS (40,44), von der die MS an die dritte BTS weitergereicht wird, des PTT-Übertragungszustandes der MS (38,42), die weitergereicht wird.

14. Verfahren gemäß Anspruch 12, das weiterhin die folgenden Schritte umfasst:
Weiterreichen einer der MSs (38,42) an eine dritte BTS; und
Übertragen von der BTS (40,44), von der die MS nicht an die dritte BTS weitergereicht wird, des PTT-Übertragungszustandes der MS (38,42), die weitergereicht wird.

15. Verfahren gemäß einem der vorangehenden Ansprüche, wobei das Verfahren weiterhin die folgenden Schritte umfasst:
Übertragen einer Halbduplex-Übertragungssteuerungssignalisierungsnachricht von einer sendenden der BTSs (40,44) an eine empfangende der BTSs (40,44) unter Verwendung einer Imband-Signalisierung über die Vollduplex-Verbindung zwischen den zwei BTSs.

16. Verfahren gemäß Anspruch 15, wobei der Übertragungsschritt ein Übertragen der Halbduplex-Übertragungssteuerungssignalisierungsnachricht über eine Imband-Transcoderbypassübertragung umfasst.

17. Verfahren gemäß Anspruch 16, wobei der Übertragungsschritt ein Übertragen der Halbduplex-Übertragungssteuerungssignalisierungsnachricht über ein nicht-verwendetes Bit von mindestens einem Oktett der Transcoderbypassübertragung umfasst.

18. Verfahren gemäß Anspruch 16 oder 17, wobei der Übertragungsschritt umfasst:
Definieren eines Nachrichten-Headers in den Bits 5-8, die einem ACELP-Paket zugeordnet sind, wobei der Nachrichten-Header bezeichnet, dass nachfolgende Bits eine Imband-Signalisierungsnachricht enthalten; und
Übertragen der Halbduplex-Übertragungssteuerungssignalisierungsnachricht mittels irgendeines der nachfolgenden Bits.

19. Verfahren gemäß einem der vorangehenden Ansprüche, wobei ein Senden der Kommunikation in einem Halbduplex-Format zwischen der zweiten BTS und der zweiten MS umfasst, dass die erste BTS (40) eine Ende-zu-Ende-Signalisierungsnachricht in eine Aufbaunachricht einfügt, die eine Halbduplex-Anrufanforderung anzeigt.

20. Verfahren gemäß einem der vorangehenden Ansprüche, wobei die Einrichtung des zweiten Halbduplex-Verbindungsschrittes eine Netzwerkvermittlungssteuerung (30) umfasst, die mit der zweiten BTS (44) verknüpft ist, die eine Halbduplex-Anrufanforderung von einer Telefonnummer identifiziert, die mit einer der MSs (38,42) verknüpft ist.

21. Verfahren gemäß einem der vorangehenden Ansprüche, wobei das Verfahren weiterhin den folgenden Schritt umfasst: Übertragen einer "Halbduplex zurückweisen"-Nachricht von einer der BTSs (40,44) an die andere der BTSs (40,44), die eine Halbduplex-Übertragungserlaubnis anfordert, wenn die zurückweisende BTS (40,44) aktuell die Erlaubnis zu übertragen für eine der MSs (38,42) aufrecht erhält, die aktuell mit der zurückweisenden BTS (40,44) verbunden ist.

22. Verfahren gemäß einem der vorangehenden Ansprüche, wobei das Verfahren weiterhin den folgenden Schritt umfasst: Übertragen einer "Halbduplex zurückweisen"-Nachricht von einem Anruf, der von einer der BTSs (40,44) stammt, zu einem Anruf, der eine der BTSs (40,44) empfängt, und Übertragen einer "Halbduplex-an-Bestätigung"-Nachricht von dem Anruf, der eine der BTSs (40,44) empfängt, zu dem Anruf, der von einer der BTSs (40,44) stammt, wobei keine der beiden MSs (38,42) aktuell über eine Erlaubnis verfügt, zu übertragen, und beide der BTSs (40,44) eine "Halbduplex-ein"-Anforderung an die jeweils andere gleichzeitig sendet.

23. Kommunikationssystem, das umfasst:
eine erste MS (38), die adaptiert ist, um mit einer ersten BTS (40) in einem Halbduplex-Format zu kommunizieren;
eine erste BTS, die adaptiert ist, um das Format einer Halbduplex-Format-Kommunikation von der ersten MS in ein Vollduplex-Format zu wandeln und die Kommunikation in einem Vollduplex-Format an eine zweite BTS (44) zu senden:
eine zweite BTS (44), die adaptiert ist, um das Format der in einem Vollduplex-Format von der ersten BTS (40) empfangenen Kommunikation in ein Halbduplex-Format zu wandeln und die Kommunikation in einem Halbduplex-Format über eine Vollduplex-Verbindung und über ein Vollduplex-Übertragungsmedium (36) an eine zweite MS zu senden; und
eine zweite MS (42), die adaptiert ist, um die Kommunikation in einem Halbduplex-Format von der zweiten BTS zu empfangen;
wobei der MS (38) gestattet wird, eine Kommunikation in einem Halbduplex-Format zu übertragen, um durch die zweite MS in einem Halbduplex-Format empfangen zu werden.

24. Kommunikationssystem gemäß Anspruch 23, das weiterhin Mittel zum Ausführen der Schritte entsprechend einem Verfahren gemäß einem der Ansprüche 2 bis 22 umfasst.

25. Basissendestation, die Mittel umfasst, um die Wandlung von Kommunikationen zwischen einem Halbduplex-Format und einem Vollduplex-Format entsprechend einem Verfahren gemäß einem der Ansprüche 1 bis 22 durchzuführen.

## Revendications

1. Procédé de communication destiné à accepter des communications en alternat par l'intermédiaire d'une liaison duplex, le procédé comprenant les étapes consistant à :
émettre une communication sous un format en alternat à partir d'une première station de radiocommunications mobile MS (38) vers une première station d'émetteur récepteur de base BTS (40),
convertir le format de la communication sous un format en alternat reçue au niveau de la première station BTS en un format duplex et envoyer la communication convertie en le format duplex de la première station BTS (40) à une seconde station BTS (44),
reconvertir le format de la communication reçue au niveau de la seconde station BTS en un format en alternat au niveau de la seconde station BTS et émettre la communication dans le format en alternat vers une seconde station MS (42),
en délivrant ainsi la communication de ladite première station MS (38) à ladite seconde station MS (42).

2. Procédé selon la revendication 1, dans lequel ladite communication duplex est envoyée par l'intermédiaire d'une liaison de communication comprenant un réseau téléphonique commuté public, RTCP.

3. Procédé selon la revendication 2, dans lequel la communication envoyée par la première station BTS est introduite dans le réseau RTCP, et extraite de celui-ci, par l'intermédiaire de contrôleurs de commutation de réseau.

4. Procédé selon l'une quelconque des revendications précédentes, et dans lequel le format de communications est converti par les stations BTS entre un format en alternat qui comprend un format modulé à code non pulsé et un format duplex qui comprend un format de signal modulé à code pulsé.

5. Procédé selon la revendication 4, et dans lequel le format modulé à code non pulsé comprend un format de signal numérique radio tronqué terrestre (TETRA).

6. Procédé selon l'une quelconque des revendications précédentes, et qui comprend en outre l'étape consistant à établir une connexion en même temps que la liaison duplex en permettant que la communication ait lieu par le biais d'une procédure dans laquelle la première station BTS produit un signal d'établissement d'appel identifiant la seconde station MS, le signal d'établissement d'appel étant dans un format qui est reconnu par le système duplex.

7. Procédé selon la revendication 6, et dans lequel le format du signal d'établissement d'appel produit par la première station BTS est un format multifréquence à deux tonalités.

8. Procédé selon la revendication 7, et dans lequel le signal d'établissement d'appel est envoyé par l'intermédiaire d'un canal vocal de la liaison duplex.

9. Procédé selon la revendication 6, la revendication 7 ou la revendication 8 et dans lequel la seconde station BTS peut être mise en oeuvre pour reconvertir le signal d'établissement d'appel en un signal d'identité reconnu par la seconde station MS en tant que signal d'établissement d'appel en alternat.

10. Procédé selon l'une quelconque des revendications précédentes et comprenant en outre l'étape consistant à établir une permission d'émettre un maximum de l'une desdites stations MS (38, 42) à un instant donné quelconque.

11. Procédé selon l'une quelconque des revendications précédentes, dans lequel l'une desdites stations MS (38,42) est une station MS appelante, où l'autre desdites stations MS (38, 42) est une station MS appelée, le procédé comprenant en outre l'étape consistant à établir, avant d'envoyer ladite communication, une condition d'autorisation d'émettre de messagerie vocale instantanée, PTT, par défaut dans laquelle l'une ou l'autre de ladite station MS appelante et de ladite station MS appelée a une permission d'émettre PTT.

12. Procédé selon la revendication 11 et comprenant en outre l'étape consistant à maintenir l'état d'émission PTT de l'une ou l'autre desdites stations MS (38, 42) au niveau de l'une ou l'autre desdites stations BTS (40, 44).

13. Procédé selon la revendication 12, et comprenant en outre les étapes consistant à :
transférer l'une desdites stations MS (38, 42) à une troisième station BTS, et
transmettre, depuis la station BTS (40, 44) à partir de laquelle ladite station MS est en cours de transfert vers ladite troisième station BTS, l'état d'émission PTT de ladite station MS (38, 42) qui est transférée.

14. Procédé selon la revendication 12, et comprenant en outre les étapes consistant à :
transférer l'une desdites stations MS (38, 42) à une troisième station BTS, et
transmettre, depuis la station BTS (40, 44) depuis laquelle ladite station MS n'est pas en cours de transfert vers ladite troisième station BTS, l'état de transmission PTT de ladite station MS (38, 42) qui est transférée.

15. Procédé selon l'une quelconque des revendications précédentes, le procédé comprenant en outre l'étape consistant à :
transmettre un message de signalisation de commande de transmission en alternat à partir d'une station BTS émettrice parmi lesdites stations BTS (40, 44) vers une station réceptrice desdites stations BTS (40, 44) en utilisant une signalisation intrabande par l'intermédiaire de la connexion duplex entre les deux stations BTS.

16. Procédé selon la revendication 15, et dans lequel ladite étape d'émission comprend l'émission dudit message de signalisation de commande de transmission en alternat par l'intermédiaire d'une émission de contournement de transcodeur intrabande.

17. Procédé selon la revendication 16, et dans lequel ladite étape d'émission comprend l'émission dudit message de signalisation de commande d'émission en alternat par l'intermédiaire d'un bit non utilisé d'au moins un octet de ladite émission de contournement de transcodeur.

18. Procédé selon la revendication 16 ou 17, et dans lequel l'étape d'émission comprend :
la définition d'un en-tête de message dans les bits 5 à 8 alloués à un paquet ACELP, où ledit en-tête de message indique que les bits suivants comprennent un message de signalisation intrabande, et
l'émission dudit message de signalisation de commande d'émission en alternat par l'intermédiaire de l'un quelconque desdits bits suivants.

19. Procédé selon l'une quelconque des revendications précédentes, et dans lequel l'émission de la communication en format en alternat entre la seconde station BTS et la seconde station MS comprend que le fait que la première station BTS (40) insère un message de signalisation de bout en bout dans un message d'initialisation indiquant une demande d'appel en alternat.

20. Procédé selon l'une quelconque des revendications précédentes, dans lequel ladite initiation de ladite étape de seconde connexion en alternat comprend le fait qu'un contrôleur de commutation de réseau (30) associé à ladite seconde station BTS (44) identifie une demande d'appel en alternat provenant d'un numéro de téléphone associé à l'une ou l'autre desdites stations MS (38,42).

21. Procédé selon l'une quelconque des revendications précédentes, le procédé comprenant en outre l'étape consistant à transmettre un message de "rejet de mode en alternat" depuis l'une desdites stations BTS (40, 44) à l'autre desdites stations BTS (40, 44) demandant une permission de transmission en alternat si ladite station BTS (40, 44) qui rejette maintient actuellement la permission d'émettre pour l'une desdites stations MS (38,42) actuellement connectée à ladite station BTS (40, 44) qui rejette.

22. Procédé selon l'une quelconque des revendications précédentes, le procédé comprenant en outre l'étape consistant à transmettre un message de "rejet d'alternat" depuis une station à l'origine de l'appel parmi lesdites stations BTS (40, 44) pour une station recevant un appel parmi lesdites stations BTS (40, 44) et à transmettre un "accusé de réception d'activation de mode en alternat" de ladite station recevant un appel parmi lesdites stations BTS (40, 44) à ladite station à l'origine de l'appel parmi lesdites stations BTS (40, 44), où aucune desdites stations MS (38, 42) n'a actuellement la permission d'émettre et où lesdites deux stations BTS (40, 44) s'envoient simultanément une demande "d'activation de mode en alternat" l'une à l'autre.

23. Système de communication comprenant :
une première station MS (38) conçue pour communiquer avec une première station BTS (40) dans un format en alternat,
une première station BTS conçue pour convertir le format d'une communication dans un format en alternat provenant de la première station MS en un format duplex et pour envoyer la communication en format duplex à une seconde station BTS (44),
une seconde station BTS (44) conçue pour convertir le format de la communication reçue en format duplex depuis la première station BTS (40) en un format en alternat et pour envoyer la communication dans un format en alternat à une seconde station MS par l'intermédiaire d'une connexion duplex et par l'intermédiaire d'un support de transmission duplex (36), et
une seconde station MS (42) conçue pour recevoir la communication en format en alternat de la seconde station BTS,
où ladite première station MS (38) est autorisée à émettre une communication en format en alternat devant être reçue en format en alternat par ladite seconde station MS.

24. Système de communication selon la revendication 23, comprenant en outre un moyen destiné à exécuter les étapes conformes à un procédé revendiqué dans l'une quelconque des revendications 2 à 23.

25. Station d'émetteur de base comprenant un moyen pour exécuter la conversion de communications entre le format en alternat et le format duplex conformément au procédé revendiqué dans l'une quelconque des revendications 1 à 22.
